# EUROPÄISCHE PATENTSCHRIFT

(11) **EP 0 731 416 B1**
(45) Veröffentlichungstag und Bekanntmachung des Hinweises auf die Patenterteilung: **04.09.2002**
(21) Anmeldenummer: 96103329.7
(22) Anmeldetag: 04.03.1996
(51) Int. Cl.: G06K 7/10, G06K 7/14

(54) **Vorrichtung zur berührungslosen Erkennung**
Contactless detection device
Dispositif de détection sans contact

(30) Priorität: 07.03.1995 DE 19508024
(43) Veröffentlichungstag der Anmeldung: 11.09.1996
(73) Patentinhaber: Astrium GmbH, 85521 Ottobrunn (DE)
(72) Erfinder: Relotius, Klaus-Dieter, Dipl.-Ing., 28816 Stuhr (DE); Meyer, Thomas, Dipl.-Ing., 28199 Bremen (DE); Lindenau, Wolfgang, Dipl.-Ing., 28309 Bremen (DE)
(74) Vertreter: Hansmann, Dierk, Dipl.-Ing.

(56) Entgegenhaltungen:
- EP-A- 0 436 072
- DE-A- 3 623 519
- DE-A- 3 630 202
- DE-C- 3 203 897
- US-A- 4 973 829
- US-A- 4 982 438
- PATENT ABSTRACTS OF JAPAN vol. 7, no. 234 (P-230) [1379] , 18.Oktober 1983 & JP 58 123164 A (SUMITOMO KEIKINZOKU KOGYO K.K.), 22.Juli 1983,

## Beschreibung

Die Erfindung betrifft eine Vorrichtung zur berührungslosen Erkennung von bewegten Objekten, insbesondere von Werkstücken, die mindestens einen optischen Sensor aufweist, der eine Markierung im Bereich des Objektes erfaßt und der mit einer Auswertungseinheit verbunden ist, die einen Analysator zur Auswertung einer erfaßten Markierung aufweist und bei der der Analysator mit einem Speicher verbunden ist, in dem Referenzmuster zur Analyse der erfaßten Markierungen abgespeichert sind.

Ähnliche Vorrichtungen werden beispielsweise im Bereich des Einzelhandels eingesetzt, um einen Kassiervorgang zu beschleunigen. Auf den zu erkennenden Waren sind als Strichcode ausgebildete Markierungen angeordnet, wobei der Strichcode eine Information sowohl über die Art der Ware als auch über den Preis enthält. Mit Hilfe eines optischen Sensors wird dieser Strichcode erfaßt und über eine Auswertung wird der entsprechende Informationsinhalt ermittelt. Hierdurch ist es möglich, auf einem Kassenzettel sowohl eine Klartextangabe zur Art der Ware als auch den entsprechenden Preis auszudrucken. Ein Verfahren zur Erkennung eines derartigen Strichcodes ist in der EP-PS 0 408 126 beschrieben.

Ebenfalls spiegelt sich der vorveröffentlichte Stand der Technik in den Druckschriften DE 32 03 897 C2 und DE 36 23 519 A1 wieder. Die DE 32 03 897 C2 betrifft eine Vorrichtung zum Erkennen und Verarbeiten von Zeichen und/oder optischen Details. Bei dem in dieser Druckschrift beschriebenen direkten Verfahren identifiziert ein optischer Sensor mit Markenerkennung direkt die Marke im Bereich des Werkstückes und gibt sie zur Weiterverarbeitung als direkt ermitteltes und nicht virtuell erstelltes Bild der Marke weiter zur Analyse. Nicht enthalten ist in dieser Druckschrift eine Mehrfenstersteuerung, eine Markenidenifizierung über mindestens drei Bildsensoren, eine Auswertung der drei Einzelbilder, die Generierung eines virtuellen Bildes aus den Einzelbildern und eine anschließende Auswertung des virtuellen Markenbildes bezüglich des Markeninhaltes.

Die DE 36 23 519 A1 betriff eine Vorrichtung zur Erkennung und Verarbeitung von alphanumerischen Zeichen und Sonderzeichen in Blockschaltbildform. Die Druckschrift zeigt ein einstufiges Verfahren. Bezüglich der DE 32 03 879 C2 besteht eine Übereinstimmung dahingehend, daß eine alphanumerische Idenifizierung des Markeninhaltes durchgeführt wird.

Im Bereich der Erkennung von Werkstücken, beispielsweise von Stangen und Wellen, die während einer Durchführung von Translations- sowie von Rotationsbewegungen erkannt werden sollen, ist ein leistungsfähiges Verfahren bislang nicht bekannt geworden. Die Erfassung von Markierungen im Bereich dieser Werkstücke erfolgt vielmehr statisch dadurch, daß die Bewegungen der Werkstücke gestoppt werden und im Stillstand die entsprechende Markierung gelesen wird. Überwiegend erfolgt diese Ablesung manuell durch eine Bedienperson. Im geringen Umfang sind auch bereits technische Hilfsmittel zur Durchführung des statischen Ablesevorganges eingesetzt worden.

Eine Erfassung der Werkstücke in einem kontinuierlichen Betrieb ohne Durchführung von Anhaltevorgängen ist somit nicht möglich. Die manuelle Erfassung durch eine Bedienperson beinhaltet Fehlerrisiken, da sowohl ein Lesefehler erfolgen kann als auch bei einem richtigen Lesen das entsprechende Registrieren fehlerhaft durchgeführt werden kann.

Aufgabe der vorliegenden Erfindung ist es daher, eine Vorrichtung der einleitend genannten Art derart auszubilden, daß eine berührungslose Identifizierung und Registrierung bei bewegten Werkstücken durchgeführt werden kann, ohne daß eine Interaktion in den Transportvorgang der Werkstücke erfolgen muß.

Diese Aufgabe wird erfindungsgemäß durch eine Vorrichtung gemäß Anspruch 1 gelöst. In der Vorrichtung ist eine Mehrstufensteuerung vorgesehen, die zunächst aus mehreren unterschiedlichen erfaßten Bildern ein die Markierung enthaltendes Bild generiert und anschließend dieses Bild zur Erkennung und Decodierung der Markierung auswertet, wobei zunächst überprüft wird, ob eines der Bilder die Markierung vollständig enthält und bei einem negativen Überprüfungsergebenis in den entstehenden erfaßten Bildern jeweils Teilbereiche der Markierung identifiziert und aus diesen Teilbereichen ein vollständiges Bild der Markierung generiert wird.

Durch die Mehrstufensteuerung ist es möglich, in den mehreren unterschiedlichen erfaßten Bildern zunächst diejenigen Bildstellen zu erkennen, die die Markierung beinhalten. Ggf. werden die in den jeweiligen Bildern enthaltenen Informationen so kombiniert, daß ein Bild entsteht, das die Markierung vollständig wiedergibt. Anschließend wird dieses mit der vollständigen Markierung versehene Bild decodiert und der entsprechende Informationsinhalt ausgewertet. Die Decodierung kann in einfacher Weise dadurch erfolgen, daß die erfaßte Markierung im Bereich des Komparators mit einem Referenzmuster verglichen wird. Dies ermöglicht es, eine sehr große Vielfalt von Markierungen zu verwenden. Beispielsweise ist es möglich, bildhafte Markierungen zu erfassen. Ebenfalls ist es möglich, Konturen zur Erkennung der Werkstücke auszuwerten.

Insbesondere ist daran gedacht, mehrere parallelarbeitende Bilderfassungseinheiten oder optische Sensoren zu verwenden, die jeweils einen Direktanschluß an eine erste Stufe der Analyseeinheit aufweisen. In der ersten Stufe der Analyseeinheit wird die optische Markierung erkannt. Die Erkennung der Markierung kann optional von allen parallelarbeitenden Analyseeinheiten der ersten Verarbeitungsstufe gleichgut durchgeführt werden. Hierdurch kann die Markierung mit ihrem Inhalt beliebig durch Auswahl aus einem einzelnen der drei Ergebnisse innerhalb der zweiten Analysestufe bezüglich des Markierungsinhaltes identifiziert werden.

Werden nur Teile der Markierung erfaßt oder liegt eine schlechte Bildqualität vor, so kann durch die parallelarbeitende Bilderfassungeinheit mit direktem Analysatoranschluß für die Idenfikation der Markierung in der ersten Stufe eine Weiterverarbeitung erfolgen. Die Markierungen oder Teile der Markierungen werden erkannt und an die zweite Analysestufe übergeben. In der zweiten Analysestufe werden die Bilder aus den parallel in der ersten Stufe erfaßten Daten kombiniert und zu einem vollständigen Bild der Markierung zusammengefaßt. Anschließend wird das Verfahren fortgesetzt, wie bei einer ursprünglichen Erfassung einer vollständigen Markierung.

Innerhalb der zwei Analysstufen können unterschiedliche Verfahren zum Einsatz kommen. In der ersten Stufe wird die optische Markierung erkannt, wobei ein Analyseverfahren zum Einsatz kommt, das der definierten Markierung optimal angepaßt ist. In der zweiten Stufe wird der Inhalt der Markierung, der aus beliebigen Zeichen bestehen kann, ebenfalls durch optimierte Analyseverfahren identifiziert. In beiden Stufen können Komparatorverfahren oder pixelbasierte beziehungsweise vektorbasierte Verfahren benutzt werden.

Zur Gewährleistung einer sicheren Erfassung der Markierung bei unterschiedlichen Einsatzbedingungen wird vorgeschlagen, daß zur Helligkeitsvorgabe im Bereich des Werkstückes im Bereich der optischen Sensoren eine Beleuchtung angeordnet ist.

Eine zweckmäßige Realisierung besteht darin, daß mindestens einer der optischen Sensoren als eine Kamera ausgebildet ist.

Zur Ermöglichung einer Erfassung der Markierung bei unterschiedlichen Orientierungen des Werkstückes wird vorgeschlagen, daß drei Sensoren vorgesehen sind.

Eine zeitgleiche Erfassung unterschiedlicher Ansichten des Werkstückes wird dadurch ermöglicht, daß im Bereich eines Erfassungsortes mehrere optische Sensoren relativ zum Werkstück mit unterschiedlichen Erfassungsrichtungen angeordnet sind.

Zur vollständigen bildlichen Erfassung des Werkstückes ist es ausreichend, daß die Sensoren relativ zum Erfassungsort soweit versetzt zueinander angeordnet sind, daß eine lückenlose Erfassung realisiert ist.

In der Zeichnung sind Ausführungsbeispiele der Erfindung schematisch dargestellt. Es zeigen:
- Fig. 1:: ein vereinfachtes Funktionsdiagramm zur Veranschaulichung der Verfahrensabläufe,
- Fig. 2: eine Skizze zur Veranschaulichung einer räumlichen Anordnung von drei optischen Sensoren,
- Fig. 3: ein Blockschaltbild zur Veranschaulichung der Mehrstufensteuerung bei der Auswertung der Markierung,
- Fig. 4: eine teilweise Darstellung eines als Welle ausgebildeten Werkstückes mit bildlichen Markierungen,
- Fig. 5: eine schematische Darstellung der Markenidentifizierung,
- Fig. 6: eine Skizze zur Veranschaulichung einer Kombination von Teilinformationen zu einem virtuellen Bild und
- Fig. 7: eine Skizze zur Veranschaulichung einer anderen Kombinationsvariante.

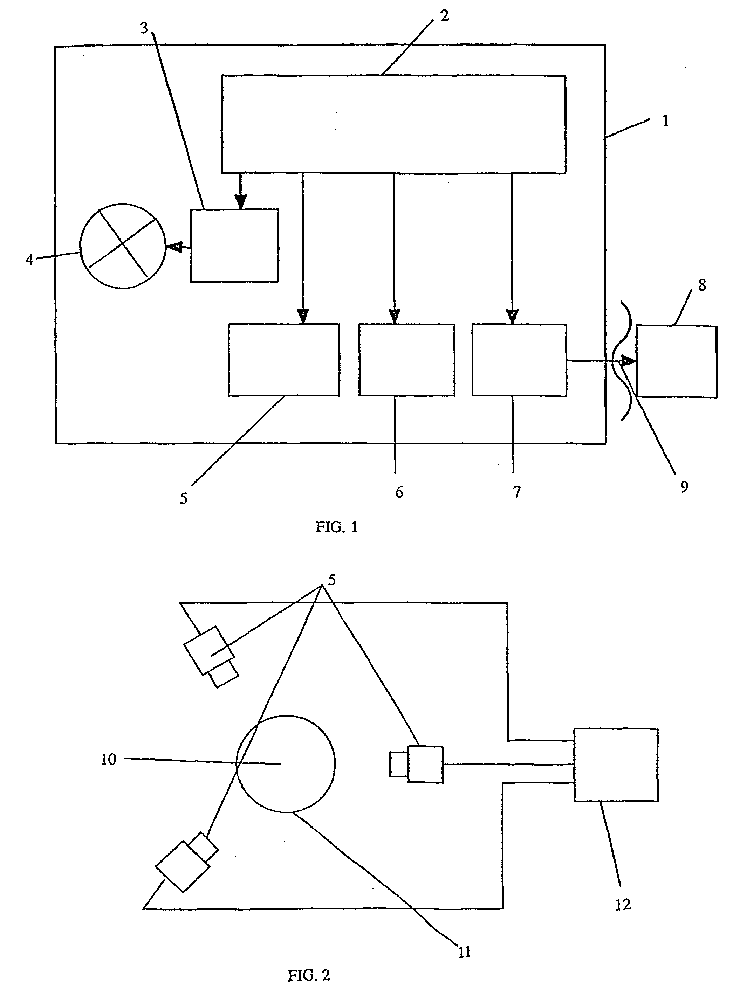

In Fig. 1 ist eine Erfassungseinrichtung (1) dargestellt, die von einer Systemsteuerung (2) koordiniert wird. Die Systemsteuerung (2) wirkt auf eine Energieversorgung (3) ein, die eine Beleuchtung (4) speist. Ebenfalls wird ein optischer Sensor (5) von der Systemsteuerung (2) überwacht. Ausgangssignale des optischen Sensors (5) werden einer Markenerkennung (6) zugeführt, die ihre Ausgangssignale an eine Markenidentifizierung (7) übermittelt. Der optische Sensor (5) und die Markenerkennung (6) sind dreifach ausgeführt. Auch die Markenerkennung (6) und die Markenidentifizierung (7) sind mit der Systemsteuerung (2) verbunden. Räumlich getrennt zur Erfassungseinrichtung (1) kann eine Markenregistrierung (8) angeordnet sein. Der Markenregistrierung (8) werden die Ausgangsdaten der Markenidentifizierung (7) über eine Anschlußleitung (9) übermittelt. Grundsätzlich ist auch eine drahtlose Übermittlung realisierbar.

Fig. 2 veranschaulicht eine mögliche geometrische Anordnung von drei optischen Sensoren (5), die beispielsweise als Kameras ausgebildet sind. Die optischen Sensoren (5) sind relativ zu einem Erfassungsort (10), an dem sich ein Werkstück (11) befindet, derart angeordnet, daß eine vollständige Erfassung des für die Auswertung der Markenerkennung erforderlicher Bereiches sichergestellt ist. Beispielsweise ist daran gedacht, die optischen Sensoren (5) relativ zum Erfassungsort (10) um 120 Grad versetzt anzuordnen. Die optischen Sensoren (5) sind an ein Bildverarbeitungssystem (12) angeschlossen, das im wesentlichen die Systemsteuerung (2), die Markenerkennung (6) und die Markenidentifizierung (7) beinhaltet. Eine Anordnung der Markenerkennung (6) als Teil der Bildverarbeitungssystems (12) räumlich zusammen mit dem Sensorsystem (5) ist möglich.

Die Anzahl der verwendeten optischen Sensoren (5) ist abhängig von den jeweils vorliegenden Umgebungsbedingungen, der Größe und der Anordnung der Markierung sowie dem zu erfassenden Werkstück (11).

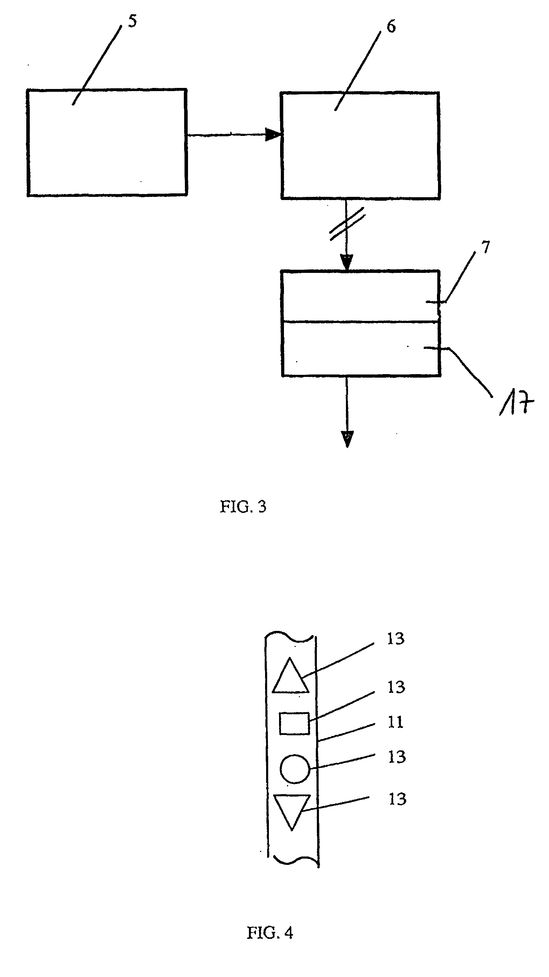

Fig. 3 veranschaulicht in modifizierter Form nochmals den Ablauf der Bildverarbeitung als erste Stufe der Identifizierung, bei der einer oder mehrere optischen Sensoren (5) ihre Informationen an die Markenerkennung (6) übermitteln. Das Markenbild wird analysiert und optimiert und anschließend der Markenidentifzierung (17) zugeführt. Hier wird aus mehreren Bildern ein resultierendes Bild generiert, das den die Markierung enthaltenden Bereich des Werkstückes (11) umfaßt. Ist die Markierung im Bereich des Werkstückes (11) beispielsweise so angeordnet, daß nur ein Teil der Markierung von einem optischen Sensor (5) und der andere Teil der Markierung von einem anderen optischen Sensor (5) erfaßbar ist, so wird aus diesen Teilinformationen ein neues Bild generiert, das die Markierung komplett enthält.

Das derart generierte Bild wird der zweiten Stufe der Markenidentifizierung (17) zugeführt, um hier eine Erkennung des Markierungsinhaltes durchzuführen und eine entsprechende Decodierung der Markierung vorzunehmen.

Die Markenerkennung (6) und ein Teil der Markenidentifizierung (17) stellen somit die erste Stufe der Bildverarbeitung dar und im Bereich der Markenidentifizierung (17) ist die zweite Stufe der Bilderkennung realisiert.

Die Markierung im Bereich des Werkstückes (11) kann beispielsweise in Form von Zahlen, Buchstaben, Codes oder bildlichen Zeichen ausgebildet sein. Zur Gewährleistung einer ausreichend klaren Erkennung der Markierung wird durch die Beleuchtung (4) eine ausreichende Helligkeit erzeugt, ebenfalls wird für einen ausreichenden Kontrast für das Aufnahmesystem gesorgt.

Durch die Aufteilung der Bildverarbeitung auf die Markenerkennung (6) und die Markenidentifizierung (7) zusammen mit dem Bildsensor (5) und der Markenidentifizierung (17) sowie aufgrund der entsprechenden Abspeicherung der Merkmale ist es möglich, eine hohe Verarbeitungsgeschwindigkeit zu realisieren, da es vorgesehen ist, Muster- und Strukturvergleiche durchzuführen. Die Verarbeitungsgeschwindigkeit wird auch dadurch erhöht, daß der Mustervergleich mit Hilfe von abgespeicherten Grundmustern durchgeführt wird. Ebenfalls ist es möglich, zur Adaption des Systems an jeweils vorhandene Markierungen einen Lernprozeß durchzuführen, in dem die vorliegenden charakteristischen Muster erfaßt werden.

Zur Gewährleistung einer hohen Verarbeitungsgeschwindigkeit ist insbesondere daran gedacht, mehrere optische Sensoren (5) aus unterschiedlichen Blickwinkeln auf das zu erfassende Werkstück (11) zu richten und gleichzeitig Bildinformationen des Werkstückes (11) aus unterschiedlichen Blickwinkeln zu generieren. Hierdurch ist sichergestellt, daß zum Erfassungszeitpunkt eine Bildinformation der vollständigen Markierung vorliegt. Aus diesen tatsächlich vorliegenden perspektivischen Ansichten des Werkstückes (11) wird dann virtuell eine Ansicht generiert, die die Markierung vollständig wiedergibt. Zu diesem Zweck ist der Bildsensor (5) jeweils mit einer Markenerkennung (6,7) versehen, so daß dieser Vorgang eindeutig in Realzeit durchgeführt werden kann. Die Markenkomplettierung und Markenidentifizierung kann ohne Realzeitanbindung nachverarbeitet werden.

Grundsätzlich ist es ebenfalls denkbar, lediglich einen optischen Sensor (5) zu verwenden und zeitlich nacheinander mehrere Bilder zu generieren und diese anschließend zu kombinieren. Aufgrund der erforderlichen Erfassungszeit kommt ein derartiger Ablauf jedoch nur dann in Betracht, wenn die Rotationsgeschwindigkeit der Objekte relativ zu ihrer translatorischen Bewegung hoch ist. Ein weiteres Anwendungsgebiet besteht dann, wenn die optischen Sensoren (5) nicht räumlich fixiert sind, sondern beispielsweise durch Drehung den translatorischen Bewegungen der Werkstücke (11) entlang einer bestimmten Wegstrecke folgen können.

Fig. 4 zeigt eine teilweise Darstellung eines Werkstückes (11), das als Welle oder als Bohrer ausgebildet sein kann. Im Bereich des Werkstückes (11) sind Markierungen (13) angeordnet, die als grafische Elemente ausgebildet sind.

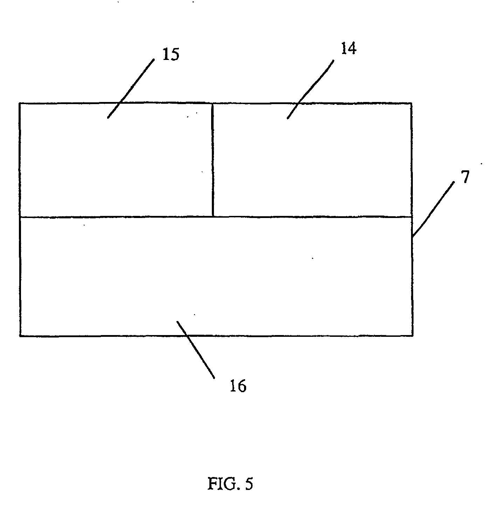

Fig. 5 zeigt schematisch den Aufbau der Markenidentifizierung (7), die mit einem Speicher (15) zur Bevorratung von Referenzmustern, einem Analysator (14) zum Vergleich der Referenzmuster mit den aktuellen Bildinformationen und einem Arbeitsspeicher (16) zur Bevorratung der aktuellen Bildinformationen ausgestattet ist.

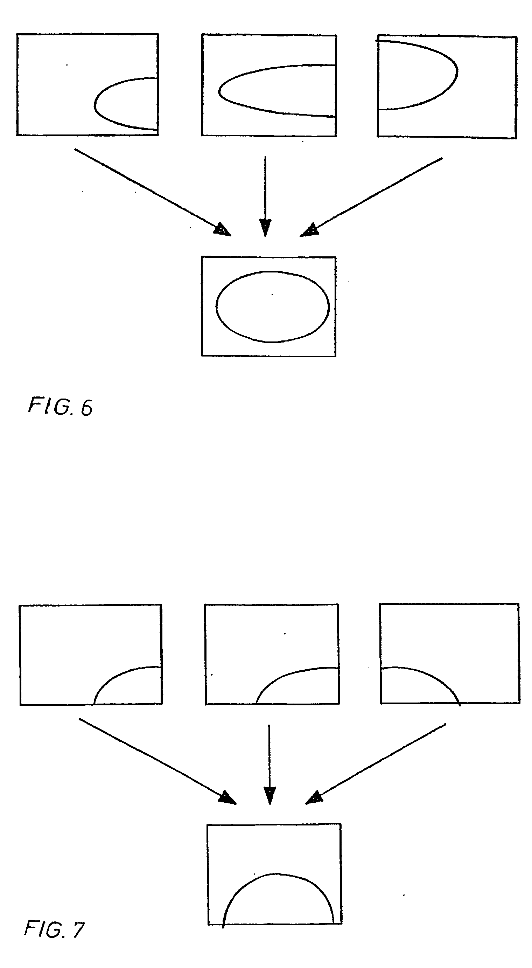

Fig. 6 und Fig. 7 zeigen schematisch die Generierung eines virtuellen neuen Bildes im Markenidentifizierer (7) als Ergebnis aus den drei Bildern der Marke aus den drei Markenerkennungen (6).

## Patentansprüche

1. Vorrichtung zur berührungslosen Erkennung von bewegten Objekten (11), insbesondere von Werkstücken, die mindestens einen optischen Sensor (5) aufweist, der eine Markierung (13) im Bereich des Objektes erfaßt und der mit einer Auswertungseinheit (7,17) verbunden ist, die einen Analysator (14) zur Auswertung einer erfaßten Markierung aufweist und bei der der Analysator mit einem Speicher (15) verbunden ist, in dem Referenzmuster zur Analyse der erfaßten Markierungen abgespeichert sind, **dadurch gekennzeichnet, daß** eine Mehrstufensteuerung vorgesehen ist, die zunächst aus mehreren unterschiedlichen erfaßten Bildern ein die Markierung (13) enthaltendes Bild generiert und anschließend dieses Bild zur Erkennung und Decodierung der Markierung (13) auswertet, wobei zunächst überprüft wird, ob eines der Bilder die Markierung (13) vollständig enthält und bei einem negativen Überprüfungsergebenis in den entstehenden erfaßten Bildern jeweils Teilbereiche der Markierung (13) identifiziert und aus diesen Teilbereichen ein vollständiges Bild der Markierung (13) generiert wird.

2. Vorrichtung nach Anspruch 1, **dadurch gekennzeichnet, daß** zur Helligkeitsvorgabe im Bereich des Werkstückes (11) im Bereich der optischen Sensoren (5) eine Beleuchtung (4) angeordnet ist.

3. Vorrichtung nach Anspruch 1 oder 2, **dadurch gekennzeichnet, daß** mindestens einer der optischen Sensoren (5) als eine Kamera ausgebildet ist.

4. Vorrichtung nach einem der Ansprüche 1 bis 3, **dadurch gekennzeichnet, daß** drei Sensoren (5) vorgesehen sind.

5. Vorrichtung nach einem der Ansprüche 1 bis 3, **dadurch gekennzeichnet, daß** mehr als drei Sensoren (5) vorgesehen sind.

6. Vorrichtung nach einem der Ansprüche 1 bis 5, **dadurch gekennzeichnet, daß** im Bereich eines Erfassungsortes (10) mehrere optische Sensoren (5) relativ zum Werkstück (11) mit unterschiedlichen Erfassungsrichtungen angeordnet sind.

7. Vorrichtung nach Anspruch 6, **dadurch gekennzeichnet, daß** die Sensoren (5) relativ zum Erfassungsort (10) jeweils um 120 Grad versetzt zueinander angeordnet sind.

8. Vorrichtung nach einem der Ansprüche 1 bis 7, **dadurch gekennzeichnet, daß** die unterschiedlichen Bilder zeitlich nacheinander generiert werden.

9. Vorrichtung nach einem der Ansprüche 1 bis 7, **dadurch gekennzeichnet, daß** die unterschiedlichen Bilder mit mehreren Kameras gleichzeitig generiert werden.

## Claims

1. Device for contactless detection of moved objects (11), in particular of workpieces, which has at least one optical sensor (5), which detects a marking (13) in the region of the object and is connected to an evaluation unit (7, 17), which has an analyser (14) for evaluating a detected marking, and in which the analyser is connected to a memory (15), in which reference patterns for analysing the detected markings are stored, **characterised in that** a multistage control is provided, which firstly generates an image containing the marking (13) from a plurality of different detected images and subsequently evaluates this image in order to detect and decode the marking (13), a test being firstly carried out as to whether one of the images fully contains the marking (13) and, in the event of a negative test result, subregions of the marking (13) being respectively identified in the corresponding detected images and a complete image of the marking (13) being generated from these subregions.

2. Device according to Claim 1, **characterised in that** a light (4) is arranged for illumination in the region of the workpiece (11) in the region of the optical sensors (5).

3. Device according to Claim 1 or 2, **characterised in that** at least one of the optical sensors (5) is designed as a camera.

4. Device according to one of Claims 1 to 3, **characterised in that** three sensors (5) are provided.

5. Device according to one of Claims 1 to 3, **characterised in that** more than three sensors (5) are provided.

6. Device according to one of Claims 1 to 5, **characterised in that** a plurality of optical sensors (5) are arranged relative to the workpiece (11) with different detection directions in the region of a detection position (10).

7. Device according to Claim 6, **characterised in that** the sensors (5) are arranged relative to the detection position (10) respectively offset by 120 degrees with respect to one another.

8. Device according to one of Claims 1 to 7, **characterised in that** the different images are generated in chronological succession.

9. Device according to one of Claims 1 to 7, **characterised in that** the different images are generated simultaneously using a plurality of cameras.

## Revendications

1. Dispositif de détection sans contact d'objets déplacés, et plus particulièrement de matériaux présentant au moins un senseur optique (5) captant un marquage (13) dans la zone de l'objet et relié à une unité d'évaluation (7, 17) dotée elle-même d'un analyseur (14) pour évaluer un marquage capté et dans le cadre de laquelle l'analyseur est relié à une mémoire (15) dans laquelle des échantillons de référence destinés à l'analyse des marquages saisis ont été prélevés, et **caractérisé en ce que** un contrôle à plusieurs niveaux est prévu, qui commence par générer à partir de plusieurs images différentes captées un image comprenant le marquage (13), puis qui évalue cette image pour la reconnaissance et le décodage du marquage (13), un premier contrôle étant effectué pour vérifier si une des images comprend entièrement le marquage (13), si, en cas de résultat négatif, des segments partiels du marquage (13) sont identifiés dans les images captées générées et si ces segments partiels génèrent une image de marquage (13) complète.

2. Dispositif selon la revendication 1, **caractérisé en ce que** un éclairage (4) a été prévu dans la zone des senseurs optiques (5), pour produire la brillance dans la zone de la pièce traitée (11).

3. Dispositif selon la revendication 1 ou 2, **caractérisé en ce que** au moins un des senseurs optiques (5) se présente sous la forme d'une caméra.

4. Dispositif selon une des revendications 1 à 3, **caractérisé en ce que** trois senseurs (5) ont été prévus.

5. Dispositif selon une des revendications 1 à 3, **caractérisé en ce que** plus de trois senseurs (5) ont été prévus.

6. Dispositif selon une des revendications 1 à 5, **caractérisé en ce que** dans la zone du lieu de saisie, (10), plusieurs senseurs (5) optiques ont été disposés avec des directions de saisie différentes par rapport à la pièce traitée (11).

7. Dispositif selon la revendication 6, **caractérisé en ce que** les senseurs (5) ont été disposés par rapport au lieu de saisie de manière à former des angles de 120° les uns avec les autres.

8. Dispositif selon une des revendications 1 à 7, **caractérisé en ce que** les différentes images sont générées les unes après les autres.

9. Dispositif selon une des revendications 1 à 7, **caractérisé en ce que** les différentes images sont produites simultanément, avec plusieurs caméras.
